(19) **Europäisches Patentamt**
**European Patent Office**
**Office européen des brevets**

(11) **EP 1 053 777 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(51) Int Cl.$^7$: **B01D 53/94**, F01N 3/10

(21) Anmeldenummer: **00110028.8**

(22) Anmeldetag: **12.05.2000**

(54) **Verfahren zur Kontrolle der katalytischen Aktivität eines NOx-Speicherkatalysators**

Process for controlling the catalytic activity of an NOx-storage catalyst

Procédé de contrôle de l'activité d'un catalyseur d'accumulation des oxydes d'azote

(84) Benannte Vertragsstaaten:
**AT BE CH CY DE DK ES FI FR GB GR IE IT LI LU MC NL PT SE**

(30) Priorität: **19.05.1999 DE 19922981**

(43) Veröffentlichungstag der Anmeldung:
**22.11.2000 Patentblatt 2000/47**

(73) Patentinhaber: **ROBERT BOSCH GMBH**
**70442 Stuttgart (DE)**

(72) Erfinder:
• **Stahl, Roland**
**71691 Freiberg (DE)**
• **Winkler, Klaus**
**71277 Rutesheim (DE)**

(56) Entgegenhaltungen:
**EP-A- 0 814 248      WO-A-00/23694**
**DE-A- 4 402 850      GB-A- 2 342 597**

**Beschreibung**

Die Erfindung betrifft ein Verfahren zur Kontrolle der katalytischen Aktivität eines $NO_x$-Speicherkatalysators nach dem Oberbegriff des Anspruchs 1.

Stand der Technik

Im Zuge der Kraftstoffeinsparung werden heute Verbrennungsmotoren bevorzugt mit einem mageren Verbrennungsgemisch betrieben. Dies führt dazu, daß im Abgaskatalysator die Stickoxide $NO_x$ nicht mehr vollständig abreagieren können, da die dazu benötigten reduzierenden Komponenten nicht mehr in ausreichendem Umfang vorliegen. Aufgrund dieser Tatsache kommen sogenannte $NO_x$-Speicherkatalysatoren zum Einsatz, die in der Lage sind, überschüssiges $NO_x$ zu speichern. Dies setzt aber voraus, daß von Zeit zu Zeit der Katalysator regeneriert wird, sobald die Speicherkapazität des $NO_x$-Speicherkatalysators erschöpft ist. Dazu wird das Verbrennungsgemisch in einer Regenerationsphase kurzzeitig fett eingestellt, bis das gespeicherte $NO_x$ vollständig umgesetzt wurde und eine erneute Speicherphase eingeleitet werden kann. Um diese Fett-/Magersteuerung erfolgreich durchführen zu können, wird im Abgasstrom in Strömungsrichtung nach dem $NO_x$-Speicherkatalysator ein Gassensor zur Bestimmung von $NO_x$ benötigt, der den am Ende der Speicherphase auftretenden Anstieg der $NO_x$-Konzentration detektiert. Gegebenenfalls kann darüber hinaus auch ein Gassensor zur Bestimmung der Sauerstoffkonzentration vorgesehen sein, der das am Ende der Regenerationsphase aus dem Katalysator austretende fette Verbrennungsabgas mit sehr geringem Sauerstoffgehalt analysiert.

Als $NO_x$-Gassensor kann ein elektrochemischer Gassensor verwendet werden, wie er beispielsweise in DE-A-199 12 102.8 beschrieben wird. Er beinhaltet zwei Meßgasräume mit jeweils einer Pumpzelle in verschiedenen Schichtebenen eines planaren, sauerstoffionenleitenden keramischen Trägers. Beide Pumpzellen bestehen aus je zwei auf einem Festelektrolyten aufgebrachten Elektroden. Das Meßgas strömt über eine erste Diffusionsoffnung in den ersten Meßgasraum ein, wo eine erste Pumpzelle einen konstant niedrigen Sauerstoffpartialdruck durch Hinein- oder Herauspumpen von Sauerstoff eingestellt. Mit Hilfe der elektrischen Spannung (elektromotorischen Kraft) einer ebenfalls im ersten Meßgasraum angeordneten Konzentrationszelle (Nernst-Zelle) wird über die Pumpspannung der Pumpzelle der Sauerstoffpartialdruck im ersten Meßgasraum eingeregelt. In einem zweiten Meßgasraum wird die Konzentration an $NO_x$ im Meßgas bestimmt, indem an der Oberfläche einer zur zweiten Pumpzelle gehörenden Elektrode das im Meßgas enthaltene $NO_x$ zersetzt und der dabei resultierende Sauerstoff zusammen mit dem noch im Meßgas verbliebenen Sauerstoff abgepumpt wird.

Die Güte der mittels des $NO_x$-Speicherkatalysators vorgenommenen Abgasreinigung ist wesentlich durch dessen Speicherkapazität und katalytische Aktivität geprägt. Beides geht aber bedingt durch die Alterung des Katalysators im Laufe der Zeit verloren. Aufgabe der Erfindung ist es, ein Verfahren zur Kontrolle der katalytischen Aktivität eines $NO_x$-Speicherkatalysators zu entwickeln.

Vorteile der Erfindung

Das erfindungsgemäße Verfahren mit den kennzeichnenden Merkmalen des Anspruchs 1 hat den Vorteil, daß es mittels eines $NO_x$-sensitiven Gassensors eine Kontrolle der katalytischen Aktivität eines $NO_x$-Speicherkatalysators gestattet. Besonders vorteilhaft ist, daß das Verfahren auf einen Gassensor zurückgreift, der bereits zur Regelung des $NO_x$-Speicherkatalysators benötigt wird und daß es auf der Bestimmung der $NO_x$-Konzentration im Abgasstrang nach dem $NO_x$-Speicherkatalysator beruht und dadurch meß- und steuerungstechnisch besonders einfach zu handhaben ist.

Durch die in den Unteransprüchen aufgeführten Maßnahmen sind vorteilhafte Weiterbildungen des im Hauptanspruch angegebenen Verfahrens möglich. So kann zur Bestimmung der katalytischen Aktivität des $NO_x$-Speicherkatalysators sowohl die während der Regenerationsphase auftretende maximale $NO_x$-Konzentration als auch der Gradient dieses Anstiegs herangezogen werden sowie das Integral über alle während der Regenerationsphase gemessenen $NO_x$-Konzentrationen.

Zeichnung

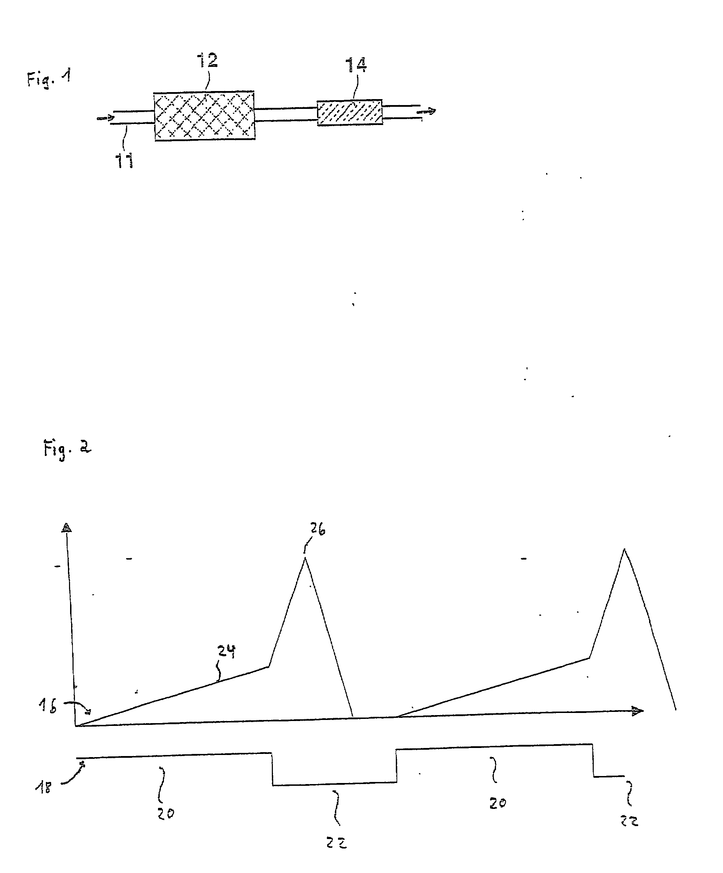

Ein Ausführungsbeispiel der dem erfindungsgemäßen Verfahren zugrundeliegenden Meßanordnung ist in der Zeichnung dargestellt und in der nachfolgenden Beschreibung näher erläutert. Figur 1 zeigt eine Skizze der zur Kontrolle der katalytischen Aktivität des $NO_x$-Speicherkatalysators benötigten Komponenten und Figur 2 eine schematisierte Meßkurve der gemessenen $NO_x$-Konzentrationen über der Abgaszusammensetzung und der Zeit.

Ausführungsbeispiel

Der prinzipielle Aufbau einer dem Verfahren zugrundeliegenden Meßanordnung wird im folgenden beschrieben. Das in einem Abgasstrang 11 entlang geführte Abgas eines Verbrennungsmotors gelangt zunächst in einen $NO_x$-Speicherkatalsator 12. Während ein mager eingestelltes Verbrennungsgemisch vorliegt, werden dort im Abgas vorhandene Stickoxide zwischengespeichert und während einer nachfolgenden Regenerationsphase katalytisch mit reduzierenden Verbindungen wie Wasserstoff, Kohlenwasserstoffen und Kohlenmonoxid umgesetzt. Nach Verlassen des $NO_x$-Speicherkatalysators 12 erfolgt eine Bestimmung der $NO_x$-Konzentration mittels eines $NO_x$-sensitiven Gassensors 14. Als $NO_x$-sensitiver Gassensor 14 kann beispielsweise ein elektrochemischer Gassensor, wie in DE-A-199 12 102.8 beschrieben, verwendet werden.

Zur Kontrolle der katalytischen Aktivität des $NO_x$-Speicherkatalysators 12 wird die $NO_x$-Konzentration des Abgases nach Verlassen des $NO_x$-Speicherkatalysators 12 während der Regenerationsphase herangezogen. Unter der katalytischen Aktivität eines $NO_x$-Speicherkatalysators versteht man dessen Fähigkeit, gespeichertes $NO_x$ an katalytisch aktiven Oberflächen mit Hilfe von Fettgaskomponenten in minder schädliche Verbindungen umzusetzen.

Die Freisetzung der Stickoxide erfolgt schematisch nach folgender Gleichung:

$$Ba(NO_3)_2 + 3\,CO \Rightarrow 3\,CO_2 + BaO + 2\,NO$$

Die als Bariumnitrat gespeicherten Stickoxide werden unter Einwirkung von reduzierenden Abgaskomponenten wie CO zu Stickstoffmonoxid reduziert und freigesetzt. An den katalytisch aktiven Oberflächen des $NO_x$-Speicherkatalysators 12 kommt es dann zur Umsetzung des Stickstoffmonoxids zu Stickstoff:

$$2\,NO + 2\,CO \Rightarrow N_2 + 2\,CO_2$$

Die bei einer zyklischen Variation der Abgaszusammensetzung im Abgas auftretenden $NO_x$-Konzentrationen sind in Figur 2 schematisch verdeutlicht. Dabei ist die $NO_x$-Konzentration 16 über der Zeit und über der Abgaszusammensetzung 18 aufgetragen. Während einer Speicherphase 20 ist ein weitgehend linearer Anstieg 24 der Stickoxidkonzentration 16 zu beobachten. Zu Beginn der Regenerationsphase 22 steigt die Konzentration 16 der Stickoxide stark an. Im weiteren Verlauf der Regenerationsphase 22 fällt die $NO_x$-Konzentration 16 nach Erreichen eines Maximums 26 stark ab und erreicht gegen Ende der Regenerationsphase 22 annähernd den Wert null.

Der starke Anstieg der Stickoxidemissionen zu Beginn der Regenerationsphase beruht darauf, daß das gespeicherte $NO_x$ innerhalb eines sehr kurzen Zeitraums freigesetzt wird und in der Kürze der Zeit nicht vollständig an den katalytisch aktiven Oberflächen des $NO_x$-Speicherkatalysators 12 umgesetzt werden kann.

Mit zunehmender Alterung des $NO_x$-Speicherkatalysators 12 werden die katalytisch aktiven Oberflächen des Katalysators beispielsweise durch Vergiftung mit im Abgas vorhandenem Schwefel geschädigt. Dies macht sich dadurch bemerkbar, daß das zu Beginn einer Regenerationsphase 22 auftretende Maximum 26 der Stickoxidemissionen bei abnehmender katalytischer Aktivität des $NO_x$-Speicherkatalysators 12 immer höhere Werte annimmt. Des weiteren ist zu beobachten, daß der Gradient dieses Anstieg bei zunehmender Alterung des Katalysators abnimmt und der Anstieg immer flacher verläuft.

Dies ermöglicht eine Diagnose der katalytischen Aktivität eines $NO_x$-Speicherkatalysators in mehrfacher Hinsicht. Zum einen kann die Höhe des Maximums 26 der Stickoxidemissionen 16 zu Beginn der Regenerationsphase 22 als Kriterium für die katalytische Aktivität des $NO_x$-Speicherkatalysators 12 herangezogen werden. Wenn der Absolutwert des Maximums 26 über einen vorbestimmten Wert hinaus geht, dann wird vom System eine mangelnde katalytische Aktivität des $NO_x$-Speicherkatalysators 12 konstatiert und beispielsweise ein Fehlersignal ausgegeben.

Eine zweite Möglichkeit ergibt sich aus der Bestimmung des Gradienten des Anstiegs der $NO_x$-Emission 16 zu Beginn der Regenerationsphase 22. Fällt der Gradient unter einen vorbestimmten Wert, so konstatiert das System ebenfalls eine mangelnde katalytische Aktivität des $NO_x$-Speicherkatalysators und gibt ein Fehlersignal aus.

Als dritte Möglichkeit kann auch das Integral über alle während der Regenerationsphase 22 freigesetzten Stickoxidkonzentrationen 16 gebildet werden. Sobald dieses einen vorbestimmten Wert übersteigt, wird wiederum eine mangelnde katalytische Aktivität des $NO_x$-Speicherkatalysators konstatiert und ein Fehlersignal ausgegeben.

Eine Kombination dieser Diagnosemöglichkeiten ist ebenso Gegenstand der Erfindung wie die Übertragung der Methodik auf andere Ausgestaltungen der Meßanordnung.

**Patentansprüche**

1. Verfahren zur Kontrolle der katalytischen Aktivität eines $NO_x$-Speicherkatalysators, bei dem mit Hilfe mindestens eines elektrochemischen Gassensors dessen katalytische Aktivität bestimmt wird, wobei der $NO_x$-Speicherkatalysator bei einem mager eingestellten Verbrennungsgemisch in einer Speicherphase $NO_x$ speichert und bei einem fett eingestellten Verbrennungsgemisch in einer Regenerationsphase das gespeicherte $NO_x$ umsetzt, **dadurch gekennzeichnet, daß** die $NO_x$-Konzentration (16) im Verbrennungsabgas von einem in Strömungsrichtung nach dem $NO_x$-Speicherkatalysator (12) angeordneten $NO_x$-sensitiven Gassensor (14) während der Regenerationsphase (22) ermittelt und als Maß für die katalytische Aktivität des $NO_x$-Speicherkatalysators (12) herangezogen wird.

2. Verfahren nach Anspruch 1, **dadurch gekennzeichnet, daß** eine mangelnde katalytische Aktivität des $NO_x$-Speicherkatalysators (12) festgestellt wird, wenn mittels des $NO_x$-sensitiven Gassensors

(14) während der Regenerationsphase (22) eine maximale NO$_x$-Konzentration (26) ermittelt wird, die über einem vorbestimmten Wert liegt.

3. Verfahren nach Anspruch 1 oder 2, **dadurch gekennzeichnet, daß** eine mangelnde katalytische Aktivität des NO$_x$-Speicherkatalysators (12) festgestellt wird, wenn mittels des NO$_x$-sensitiven Gassensors (14) zu Beginn der Regenerationsphase (22) ein maximaler Gradient des Anstiegs der NO$_x$-Konzentration (16) ermittelt wird, der unter einem vorbestimmten Wert liegt.

4. Verfahren nach einem der Ansprüche 1 bis 3, **dadurch gekennzeichnet, daß** eine mangelnde katalytische Aktivität des NO$_x$-Speicherkatalysators (12) festgestellt wird, wenn das Integral der mittels des NO$_x$-sensitiven Gassensors (14) während der Regenerationsphase (22) gemessenen NO$_x$-Konzentrationen (16) über einem vorbestimmten Wert liegt.

## Claims

1. Method for monitoring the catalytic activity of an NO$_x$ storage catalytic converter, in which the catalytic activity of this catalytic converter is determined with the aid of at least one electrochemical gas sensor, the NO$_x$ storage catalytic converter storing NO$_x$ in a storage phase with a combustion mix which is set to be lean and converting the stored NO$_x$ in a regeneration phase with a combustion mix which is set to be rich, **characterized in that** the NO$_x$ concentration (16) in the combustion exhaust gas is determined during the regeneration phase (22) by an NO$_x$-sensitive gas sensor (14) arranged downstream of the NO$_x$ storage catalytic converter (12), as seen in the direction of flow, and is used as a measure of the catalytic activity of the NO$_x$ storage catalytic converter (12).

2. Method according to Claim 1, **characterized in that** it is concluded that the catalytic activity of the NO$_x$ storage catalytic converter (12) is deficient if the NO$_x$-sensitive gas sensor (14), during the regeneration phase (22), determines a maximum NO$_x$ concentration (26) which is above a predetermined value.

3. Method according to Claim 1 or 2, **characterized in that** it is concluded that the catalytic activity of the NO$_x$ storage catalytic converter (12) is deficient if the NO$_x$-sensitive gas sensor (14), at the start of the regeneration phase (22), determines a maximum gradient of the rise in the NO$_x$ concentration (16) which is above a predetermined value.

4. The method as claimed in one of Claims 1 to 3, **characterized in that** it is concluded that the catalytic activity of the NO$_x$ storage catalytic converter (12) is deficient if the integral of the NO$_x$ concentrations (16) measured by means of the NO$_x$-sensitive gas sensor (14) during the regeneration phase (22) is above a predetermined value.

## Revendications

1. Procédé de contrôle de l'activité catalytique d'un catalyseur accumulateur de NO$_x$ dans lequel l'activité catalytique de ce dernier est déterminée à l'aide d'au moins un détecteur de gaz électrochimique, le catalyseur accumulateur de NO$_x$ accumulant les NO$_x$ dans une phase d'accumulation avec utilisation d'un mélange de combustion maigre et transformant, avec utilisation d'un mélange de combustion riche dans une phase de régénération, les NO$_x$ accumulés, **caractérisé en ce que** la concentration en NO$_x$ (16) dans les gaz de combustion est déterminée par un détecteur de gaz sensible aux NO$_x$ (14) disposé dans le sens de l'écoulement des gaz après le catalyseur (12), pendant la phase de régénération (22) et est utilisée comme mesure de l'activité catalytique du catalyseur (12).

2. Procédé selon la revendication 1, **caractérisé en ce qu'** une activité catalytique insuffisante du catalyseur (12) est constatée lorsque se trouve déterminée, au moyen du détecteur de gaz sensible aux NO$_x$ (14), pendant la phase de régénération (22), une concentration en NO$_x$ (26) maximale qui est supérieure à une valeur prédéterminée.

3. Procédé selon la revendication 1 ou 2, **caractérisé en ce qu'** une activité catalytique insuffisante du catalyseur (12) est constatée lorsque se trouve déterminé, au moyen du détecteur de gaz sensible aux NO$_x$ (14), au début de la phase de régénération (22), un gradient maximal de l'augmentation de la concentration en NO$_x$ (16) qui est inférieur à une valeur prédéterminée.

4. Procédé selon l'une quelconque des revendications 1 à 3, **caractérisé en ce qu'** une activité insuffisante du catalyseur (12) est constatée lorsque l'intégrale des concentrations en NO$_x$ mesurées pendant la phase de régénération (22) au moyen du détecteur de gaz sensible aux NO$_x$ (14) est supérieure à une valeur prédéterminée.

Fig. 1

12

14

11

Fig. 2

26

24

16

18

20

22

20

22

22